# EUROPÄISCHE PATENTSCHRIFT

(11) **EP 3 670 171 B1**
(45) Veröffentlichungstag und Bekanntmachung des Hinweises auf die Patenterteilung: **09.12.2020**
(21) Anmeldenummer: 18213037.7
(22) Anmeldetag: 17.12.2018
(51) Int. Cl.: B31B 70/00, B31B 70/04, B31B 70/14, B31B 70/60, B31B 70/64, B31B 70/81, B29C 65/10, B29C 65/78, B29C 69/00, B31B 150/00, B31B 160/20

(54) **VORRICHTUNG UND VERFAHREN ZUM AUFBRINGEN VON DECKBLÄTTERN AUF ZU KREUZBÖDEN VORGEFORMTEN ENDEN VON SCHLAUCHABSCHNITTEN**
DEVICE AND METHOD FOR APPLYING COVER SHEETS TO PREFORMED CROSS-BOTTOM ENDS OF TUBULAR SECTIONS
DISPOSITIF ET PROCÉDÉ D'APPLICATION DE FEUILLES DE COUVERTURE SUR DES EXTRÉMITÉS PRÉFORMÉES À FONDS CROISÉS DE TRONCONS DE TUBE

(43) Veröffentlichungstag der Anmeldung: 24.06.2020
(73) Patentinhaber: Starlinger & Co Gesellschaft m.b.H., 1060 Wien (AT)
(72) Erfinder: Grabenweger, Markus, 2564 Furth an der Triesting (AT); Grill, Hannes, 2571 Altenmarkt an der Triesting (AT)
(74) Vertreter: Margotti, Herwig Franz

(56) Entgegenhaltungen:
- EP-A2- 0 953 429
- WO-A1-2008/090056
- WO-A1-2018/073224
- DE-A1-102014 214 593

## Beschreibung

Die Erfindung betrifft eine Vorrichtung zum Aufbringen von Deckblättern auf zu Kreuzböden vorgeformten Enden von Schlauchabschnitten nach dem Oberbegriff des Anspruchs 1 und ein Verfahren zum Aufbringen von Deckblättern auf zu Kreuzböden vorgeformten Enden von Schlauchabschnitten nach dem Oberbegriff des Anspruchs 8.

Zur Verpackung von Gütern, insbesondere Schüttgütern, werden verschiedene Arten von Säcken verwendet. Säcke werden im Allgemeinen aus Schlauchabschnitten aus Papier- oder Kunststoffmaterial hergestellt, indem Enden der Schlauchabschnitte zu Böden gefaltet werden. Je nach weiterem Einsatzzweck werden entweder beide Enden eines Schlauchabschnitts zu Böden gefaltet, oder es wird nur ein Ende zu einem Boden gefaltet. Um ein Entfalten der Böden zu verhindern, werden diese nach dem Falten entweder verklebt oder verschweißt. Eine besonders weit verbreitete Bodenform ist beispielsweise der Kreuzboden.

Bei Kreuzböden bilden sich beim Falten eines Endes der Schlauchabschnitte ein erster innerer Dreiecksbereich, ein erster äußerer Dreiecksbereich, ein zweiter innerer Dreiecksbereich, ein zweiter äußerer Dreiecksbereich und ein Mittelbereich aus. In Bodenlängsrichtung ist der erste innere Dreiecksbereich zwischen dem ersten äußeren Dreiecksbereich und dem Mittelbereich angeordnet und der zweite innere Dreiecksbereich zwischen dem zweiten äußeren Dreiecksbereich und dem Mittelbereich angeordnet. Werden beide Enden eines Schlauchabschnitts zu Kreuzböden gefaltet, wird zumeist zumindest ein Kreuzboden mit einem Ventilzettel versehen, um ein späteres Befüllen des fertigen Sacks zu erleichtern.

Damit die Kreuzböden höheren Belastungen Stand halten, werden diese zusätzlich noch mit Deckblättern versehen, wobei die Deckblätter über die inneren Dreiecksbereiche und den Mittelbereich reichen. Bei Schlauchabschnitten aus einem Kunststoffmaterial werden die Deckblätter zumeist mit den Kreuzböden verschweißt, da sich das Schweißen als sehr kosteneffiziente und haltbare Verbindung herausgestellt hat. Zum Verschweißen der Deckblätter auf den Kreuzböden wird vorwiegend eine Heißgaseinrichtung eingesetzt, an der die Kreuzböden in einem konstanten Abstand vorbeibewegt werden. Ein von der Heißgaseinrichtung erzeugter erhitzter Gasstrom erhitzt jeweils den gerade an der Heißgaseinrichtung vorbeibewegten Kreuzboden, bis dessen Oberfläche aufschmilzt. Gleichzeitig wird ein Deckblatt auf den Kreuzboden aufgepresst und damit fest mit dem Kreuzboden verschweißt.

Ein Verfahren zum Schweißen eines Deckblatts auf einen Kreuzboden mittels einer Heißgaseinrichtung ist beispielsweise aus der WO 9530598 A1 bekannt.

Durch das Falten weisen die Kreuzböden in den Dreiecksbereichen eine geringere Anzahl an Gewebelagen auf als im Mittelbereich, wodurch der Mittelbereich gegenüber den Dreiecksbereichen erhaben ist. Hierdurch ergibt sich der Nachteil, dass der Gasstrom, während die Kreuzböden an der Heißgaseinrichtung vorbei bewegt werden, die Oberfläche der Kreuzböden unterschiedlich stark erhitzt, weil die einzelnen Bereiche der Kreuzböden unterschiedliche Abstände von der Gasdüse aufweisen und der Gasstrom die Oberflächenabschnitte des Kreuzbodens somit thermisch variierend erreicht. Insbesondere werden die Dreiecksbereiche weniger stark erhitzt, weil hier der Abstand von der Oberfläche des Kreuzbodens zur Gasdüse am größten ist, wodurch es zu einer schlechten Haftung des Deckblatts in diesen Bereichen kommt. Eine Erhöhung der Temperatur des Gasstroms stellt keine brauchbare Alternative dar, da es bei erhöhter Temperatur des Gasstroms zum Überhitzen des Materials im Mittelbereich der Kreuzböden kommen würde. Hierdurch würden die fertigen Säcke nicht nur ein unansehnliches Erscheinungsbild aufweisen, sondern es würde auch die Festigkeit des Bodens und die Haftung des Deckblatts in diesem Bereich verringert werden.

Die Schrift DE 10 2014 214593 A1 zeigt eine Vorrichtung zum Heißluftversiegeln von Verpackungsmaterial. Die Vorrichtung umfasst zwei hintereinander geführte Lufterhitzer. Zur Steuerung des Heißgases ist zwischen den Lufterhitzern ein Ventil vorgesehen, mittels welchen nicht benötigtes Heißgas nochmals durch den vorgeschalteten Lufterhitzer geführt werden kann.

Die Schrift EP 0 953 429 A2 offenbart ein Verfahren zum Regeln der Temperatur beim Heißluftverkleben von Kunststofffolien, bei welchem die Temperatur der Heißluft nach dem Verkleben des Werkstücks bestimmt wird und die Temperatur der eingeblasenen Luft in Abhängigkeit der gemessenen Temperatur geregelt wird.

Die Schrift WO 2018/073224 A1 zeigt eine Vorrichtung zum Siegeln eines Deckblatts auf einen Schlauchabschnitt. Zu diesem Zweck wird ein Heißluftstrom zwischen die genannten Elemente eingeblasen. Zur schnellen Steuerung der Temperatur des Heißluftstroms kann zusätzlich ein Kaltluftstrom eingeblasen werden.

In der Schrift WO 2008/090056 A1 wird ein Verfahren zur Herstellung von Kunststoffsäcken offenbart. Hierbei werden zwei Oberflächen mittels einer Heizeinrichtung erwärmt und danach verpresst. De hierfür eingesetzte Vorrichtung kann überdies eine Vorwärmeinrichtung umfassen, bei welcher zumindest ein Bestandteil der Säcke mittels eines Heißluftstroms vorgewärmt werden kann.

Es ist die Aufgabe der vorliegenden Erfindung, die Nachteile des Standes der Technik zu vermeiden und eine Vorrichtung und ein Verfahren bereitzustellen, durch die Deckblätter auf zu Kreuzböden vorgeformten Enden von Schlauchabschnitten aus Kunststoffmaterial unter Gewährleistung einer gleichmäßigen Haftung der Deckblätter aufgebracht werden können. Erfindungsgemäß wird die vorliegende Aufgabe durch eine Vorrichtung mit den Merkmalen des Anspruchs 1 und mit einem Verfahren mit den Merkmalen des Anspruchs 8 gelöst.

Bevorzugte Ausgestaltungen der Erfindung sind Gegenstand der abhängigen Ansprüche und der Bcschrcibung.

Die erfindungsgemäße Vorrichtung umfasst Fördereinrichtungen, die dazu ausgebildet sind, die Schlauchabschnitte in einer Förderrichtung zu transportieren, wobei die Bodenlängsrichtung der Kreuzböden parallel zur Förderrichtung der Schlauchabschnitte liegt. Die Fördereinrichtungen sind ferner dazu ausgebildet, Deckblätter in Förderrichtung zu fördern und auf den zu Kreuzböden vorgeformten Enden der Schlauchabschnitte in einem Ablegebereich abzulegen, wenn einer der Kreuzböden den Ablegebereich passiert, während die Schlauchabschnitte gefördert werden.

Weiterhin umfasst die erfindungsgemäße Vorrichtung eine Heißgaseinrichtung. Die Heißgaseinrichtung weist einen Gaserhitzer zum Erhitzen von Gas und eine an den Gaserhitzer angeschlossene, zu dem Ablegebereich für die Deckblätter gerichtete Düse auf. Der Gaserhitzer ist an eine Gaszufuhr anschließbar, und bei Zufuhr von Gas zum Gaserhitzer strömt das Gas entlang eines Strömungspfads von der Gaszufuhr durch den Gaserhitzer und die Düse in den Ablegebereich.

Die Heißgaseinrichtung weist ein Heißgasreservoir mit einem Innenvolumen zum temporären Speichern von Heißgas auf. Das Heißgasreservoir ist entweder direkt in den Gaserhitzer integriert oder ist zwischen dem Gaserhitzer und der Düse angeordnet. Der Strömungspfad verläuft durch das Heißgasreservoir.

Ferner weist die erfindungsgemäße Vorrichtung eine Steuerung auf, mittels der ein Gas-Massenstrom an zum Gaserhitzer zugeführtem Gas regelbar ist.

Wird Gas von der Gaszufuhr zu dem Gaserhitzer zugeleitet, so durchströmt dieses zuerst den Gaserhitzer. Der Gaserhitzer weist ein Heizelement auf, der einen Heizwärmestrom zum durch den Gaserhitzer geleiteten Gas zuführt. Je nachdem, wie hoch der Massenstrom des durch den Gaserhitzer hindurch geleiteten Gases ist, wird das Gas beim Durchströmen des Gaserhitzers bei gleichbleibendem Heizwärmestrom unterschiedlich stark erwärmt. Bei einem niedrigen zum Gaserhitzer zugeführten Gas-Massenstrom wird das durch den Gaserhitzer strömende Gas stärker erwärmt als bei einem hohen Gasmassenstrom. Das Heizelement des Gaserhitzers wird bevorzugt elektrisch oder mittels eines Brenngases wie Methan, Wasserstoff, etc. betrieben.

Vom Gaserhitzer strömt das Gas in das Heißgasreservoir. Das Heißgasreservoir stellt einen Pufferspeicher dar und wird je nachdem, wie hoch die Temperatur des einströmenden Gases ist, mit Gas mit unterschiedlichen Temperaturen beladen / durchströmt. Beispielsweise wird das Heißgasreservoir bei einem niedrigen Gas-Massenstrom mit einem Gas mit höherer Temperatur beladen / durchströmt als bei einem hohen Gas-Massenstrom. Das Heißgasreservoir schließt vorteilhaft zur Vermeidung von Wärmeverlusten direkt an den Gaserhitzer an.

Vom Heißgasreservoir strömt das Gas über die Düse in den Ablegebereich. Die Düse schließt verteilhaft auch zur Vermeidung von Wärmeverlusten direkt an das Heißgasreservoir an. Der Massenstrom an erhitztem Gas, der bei der Düse austritt, entspricht (unter Vernachlässigung von Reibung) dem Gas-Massenstrom, der zum Gaserhitzer zugeführt wird. Wird nun schlagartig der Gas-Massenstrom verändert, so weist der Gas-Massenstrom, der aus dem Gaserhitzer austritt, eine veränderte Temperatur auf. Aufgrund der Massenbilanzgleichung ist der Gas-Massenstrom an der Düse nach dem Umschalten nach Überwindung der Trägheit des Gases sofort gleich dem Gas-Massenstrom, der zum Gaserhitzer zugeführt wird. Das mit dem Gas-Massenstrom transportierte Gas verdrängt das noch im Heißgasreservoir vorhandene Gas, bevor es dieses füllt. Die Temperatur des Gases an der Düse verändert sich somit nach Veränderung des zum Gaserhitzer zugeführten Gasmassenstrom nicht sofort, sondern zuerst muss das noch in dem Heißgasreservoir vorhandene Gas aus dem Heißgasreservoir ausströmen. Wurde beispielsweise das Heißgasreservoir mit Gas mit hoher Temperatur bei einem niedrigen Gas-Massenstrom befüllt und wird nun der Gas-Massenstrom erhöht, so wird an der Düse Gas mit erhöhter Temperatur mit erhöhtem Gas-Massenstrom ausgegeben, wodurch temporär ein heißer Gasstrahl mit hoher Strömungsgeschwindigkeit erzeugt wird. Hierdurch wird ein hoher Wärmestrom in den Ablegebereich eingebracht. Wird nun der Gas-Massenstrom wieder reduziert, so wird an der Düse Gas mit niedriger Temperatur mit niedrigem Gas-Massenstrom ausgegeben, bis das Heißgasreservoir entleert ist, wodurch temporär ein weniger heißer Gasstrahl mit geringerer Strömungsgeschwindigkeit erzeugt wird. Hierdurch wird ein niedriger Wärmestrom in den Ablegebereich eingebracht.

Somit kann bei entsprechender Steuerung des Gas-Massenstroms und Dimensionierung des Innenvolumens des Heißgasreservoirs temporär ein hoher Massenstrom an erhitztem Gas mit hoher Temperatur und temporär ein niedriger Massenstrom an erhitztem Gas mit niedriger Temperatur an der Düse ausgegeben werden, obwohl immer die exakt gleiche Menge Wärmeleistung zum Gas-Massenstrom im Gaserhitzer zugeführt wird. Dadurch arbeitet die erfindungsgemäße Vorrichtung sehr energieeffizient, umwelt- und kostenschonend.

Um einen Kreuzboden in den inneren Dreiecksbereichen und dem Mittelbereich gleichmäßig zu erwärmen, wird erfindungsgemäß zur Erwärmung des Mittelbereichs auf Schmelztemperatur aus der Düse weniger Wärmeleistung ausgegeben als in den inneren Dreiecksbereichen des Kreuzbodens, da der Mittelbereich eines jeden Kreuzbodens gegenüber den inneren Dreiecksbereichen erhaben und somit der Düse näher ist. Dazu wird bei dem erfindungsgemäßen Verfahren unter Ausnützung des Heißgasreservoirs:
- Gas mit erhöhtem Gas-Massenstrom zur Heißgaseinrichtung zugeführt, während der erste innere Dreiecksbereich eines Kreuzbodens den Ablegebereich passiert,
- Gas mit verringertem Gas-Massenstrom zur Heißgaseinrichtung zugeführt, während der Mittelbereich eines Kreuzbodens den Ablegebereich passiert, und
- Gas mit erhöhtem Gas-Massenstrom zur Heißgaseinrichtung zugeführt, während der zweite innere Dreiecksbereich eines Kreuzbodens den Ablegebereich passiert.

Durch die gleichmäßigere Erwärmung des Kreuzbodens wird dieser gleichmäßig aufgeschmolzen, wodurch ein auf den Kreuzboden aufgepresstes Deckblatt überall die gleiche Haftung aufweist.

Damit sichergestellt wird, dass durch das Gas im Wesentlichen im gesamten ersten inneren Dreiecksbereich und/oder im Wesentlichen im gesamten zweiten inneren Dreiecksbereich ein hoher Wärmestrom eingebracht wird und/oder dass durch das Gas im Wesentlichen im gesamten Mittelbereich ein niedrigerer Wärmestrom eingebracht wird, wird/werden vorteilhaft:
- der Massenstrom an zur Heißgaseinrichtung zugeführtem Gas erhöht, kurz bevor der erste innere Dreiecksbereich eines Kreuzbodens den Ablegebereich erreicht;
- der Massenstrom an zur Heißgaseinrichtung zugeführtem Gas verringert, sobald der Mittelbereich in den Ablegebereich eintritt;
- der Massenstrom an zur Heißgaseinrichtung zugeführtem Gas erhöht, sobald der zweite innere Dreiecksbereich in den Ablegebereich eintritt;
- bei - in Förderrichtung gesehen - voneinander beabstandet transportierten Schlauchabschnitten der Massenstrom an zur Heißgaseinrichtung zugeführtem Gas verringert, während sich kein erster innerer Dreiecksbereich, zweiter innerer Dreiecksbereich oder Mittelbereich eines Kreuzbodens im Ablegebereich befindet; und/oder
- der Massenstrom an zur Heißgaseinrichtung zugeführten Gas verringert, sobald der zweite innere Dreiecksbereich eines Kreuzbodens den Ablegebereich passiert hat.

Hierdurch wird die Trägheit des Systems ausgeglichen. Somit wird vermieden, dass zu Teilen der Oberfläche des Kreuzbodens unzureichend Wärme oder zu viel Wärme zugeführt wird und diese unzureichend aufgeschmolzen oder überhitzt werden. Damit ist über die gesamte Oberfläche des Kreuzbodens eine gleichmäßige Haftung des Deckblatts sichergestellt.

Vorteilhaft ist das Heißgasreservoir rohrförmig ausgebildet, damit dieses von dem Gas möglichst ohne Reibungs- und Strömungsverluste durchströmbar ist. Vorteilhaft weist das rohrförmige Heißgasreservoir im Wesentlichen denselben Durchmesser auf wie ein Verbindungsschlauch, mittels welchem Gas von der Gaszufuhr zum Gaserhitzer zugeführt wird. Das Heißgasreservoir ist vorteilhaft mit einer isolierenden Schicht ummantelt, um Wärmeverluste im Heißgasreservoir möglichst zu verhindern.

Weiterhin ist vorteilhaft eine Wandung des Heißgasreservoirs so ausgebildet, dass diese Wärme speichern kann. Wenn das Heißgasreservoir beispielsweise mit Gas mit einer hohen Temperatur beladen ist, wird dem Gas Wärme entzogen und in der Wandung gespeichert. Wird nun das Heißgasreservoir mit Gas mit einer niedrigeren Temperatur beladen, so findet ein Wärmeübergang von den Wänden in das Gas mit niedriger Temperatur statt, wodurch dieses erwärmt wird. Dadurch kann im Heißgasreservoir eine größere Wärmemenge gespeichert werden als sich aus dem Wärmeinhalt des darin gespeicherten Heißgases ergeben würde.

Zweckmäßig ist die Gaszufuhr durch ein Druckluftreservoir gebildet, an welches die Vorrichtung angeschlossen ist. Das Druckluftreservoir kann zum Beispiel Teil einer Druckluftversorgung einer Werkshalle oder einer Werkstatt sein oder kann auch durch eine oder mehrere Hochdruckflaschen gebildet sein. Der Gas-Massenstrom an zum Gaserhitzer zugeführten Gas wird bei dieser Ausführungsform vorteilhaft über ein Ventil geregelt, das zwischen Gaszufuhr und Gaserhitzer geschaltet ist und welches durch die Steuerung regelbar ist.

Bevorzugt ist die Gaszufuhr eine Komponente der Vorrichtung und somit Teil der Vorrichtung. In dieser Ausführungsform ist die Gaszufuhr vorteilhaft durch einen Verdichter und/oder zumindest ein Druckluftreservoir gebildet. Je nach Ausbildung der Gaszufuhr kann der Gas-Massenstrom an zum Gaserhitzer zugeführten Gas entweder durch eine Verdichterleistung des Verdichters geregelt werden und/oder durch ein Ventil, das zwischen Verdichter und/oder dem zumindest einen Druckluftreservoir und dem Gaserhitzer ausgebildet ist.

Bevorzugt wird ein Innenvolumen des Heißgasreservoirs so in Abhängigkeit von der Länge der inneren Dreiecksbereiche und des Mittelbereichs sowie der Massenströme gewählt, dass gewährleistet ist, dass die inneren Dreiecksbereiche nur mit heißem Gas bei einem hohen Massenstrom - in weiterer Folge als Gesamtmassenstrom bezeichnet - erwärmt werden und der Mittelberiech nur mit weniger heißem Gas bei einem kleineren Massenstrom - in weiterer Folge als Grundmassenstrom bezeichnet - erwärmt werden. Der Gesamtmassenstrom setzt sich aus dem Grundmassenstrom plus einem Impulsmassenstrom zusammen. Vorteilhaft beträgt in diesem Zusammenhang ein Volumen des Pulsmassenstroms ein Fünftel bis ein Zwanzigstel des Innenvolumens des Heißgasreservoirs.

Bevorzugt weist die Gaszufuhr zumindest einen Verdichter und/oder zumindest ein Druckluftreservoir und einen Injektor auf, wobei zumindest ein konstant laufender Verdichter den Grundmassenstrom an zum Gaserhitzer zugeführten Gas erzeugt. Der Injektor erzeugt mittels zumindest eines zweiten Verdichters und/oder zumindest eines Druckluftreservoirs den Pulsmassenstrom, wodurch der Gesamtmassenstrom gebildet wird. Durch diesen einfachen Aufbau der Gaszufuhr kann die Zufuhr an Gas zum Gaserhitzer sehr schnell verändert werden und somit kann die Gaszufuhr sehr exakt gesteuert werden.

Die Fördereinrichtung zum Fördern der Schlauchabschnitte ist vorteilhaft durch einen Gurtförderer oder einen Bandförderer gebildet, und die Fördereinrichtung zum Fördern der Deckblätter ist vorteilhaft durch einen Saugzylinder gebildet.

Zweckmäßig ist das Heißgasreservoir derart ausgebildet, dass das Innenvolumen des Heißgasreservoirs veränderbar ist. Bei einem rohrförmigen Heißgasreservoir kann beispielsweise über Hülsen mit unterschiedlicher Wandstärke oder über eine verschiedene Anzahl an Hülsen das Innenvolumen verändert werden. Vorteilhaft sind solche Hülsen aus einem gut wärmeleitenden Material, wie Aluminium, Messing, Silber oder Kupfer gebildet. Bevorzugt wird das Innenvolumen des Heißgasreservoirs in Abhängigkeit von beispielsweise einer Taktzahl bei der Aufbringung der Deckblätter, einem Sackformat und/oder einem Sackabstand zwischen aufeinanderfolgenden Säcken gewählt.

Vorteilhaft ist das zum Gaserhitzer zugeführte Gas Luft, Stickstoff, Kohlendioxid, oder eine Mischung davon.

Weitere vorteilhafte Ausführungsformen der erfindungsgemäßen Vorrichtung und des erfindungsgemäßen Verfahrens zum Aufbringen von Deckblättern auf zu Kreuzböden vorgeformten Enden von Schlauchabschnitten werden in weiterer Folge anhand der Figuren näher erläutert.
Figur 1 zeigt einzelne Bearbeitungsschritte zum Formen von Enden von Schlauchabschnitten zu Kreuzböden.
Figur 2 zeigt eine Ausführungsform einer erfindungsgemäßen Vorrichtung zum Aufbringen von Deckblättern auf die zu Kreuzböden geformten Enden von Schlauchabschnitten in einer schematischen Ansicht.
Figuren 3 und 4 zeigen eine Heißgaseinrichtung der erfindungsgemäßen Vorrichtung als vereinfachtes System.
Figur 5 zeigt ein Diagramm der vorherrschenden Temperaturen in dem vereinfachten System gemäß den Figuren 3 und 4 in Abhängigkeit von einem zur Heißgaseinrichtung zugeführten Gas-Massenstrom.

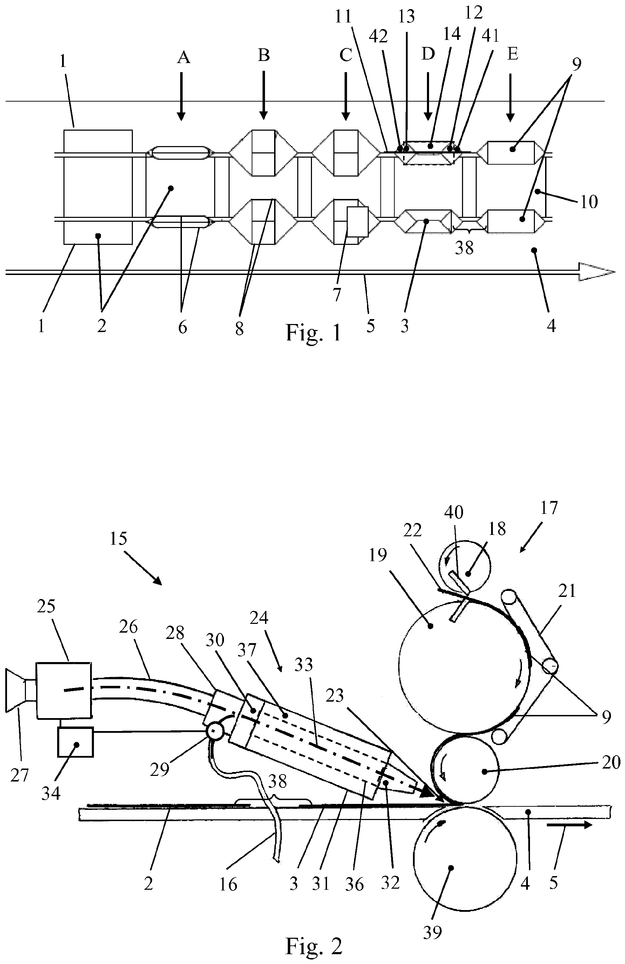

Figur 1 zeigt stark vereinfacht einzelne Bearbeitungsschritte A bis E zum Formen von Enden 1 von Schlauchabschnitten 2 zu Kreuzböden 3 und Aufbringen eines Deckblatts 9 auf die fertigen Kreuzböden 3. Die Schlauchabschnitte 2 werden während der Durchführung der Bearbeitungsschritte A bis E auf einem Förderband 4 in Förderrichtung 5 flachliegend mit aneinander anliegenden Schlauchlagen 6 in einem Abstand 38 zueinander transportiert.

Im Bearbeitungsschritt A werden die Enden 1 der Schlauchabschnitte 2 um 90 Grad umgefaltet.

Im Bearbeitungsschritt B werden die Schlauchlagen 6 auseinandergezogen, wodurch die Enden 1 geöffnet werden. Durch Niederfalten der geöffneten Enden 1 werden Laschen 8 gebildet.

Im Bearbeitungsschritt C wird in zumindest ein auseinandergezogenes, geöffnetes Ende 1 ein Ventilzettel 7 eingelegt und zumindest teilweise mit dem geöffneten Ende 1 verschweißt oder verklebt.

Im Bearbeitungsschritt D werden die Laschen 8 umgefaltet, wodurch jeweils an einem Ende 1 ein Kreuzboden 3 gebildet wird. Durch das Falten weist jeder Kreuzboden 3 einen ersten inneren Dreiecksbereich 12, einen ersten äußeren Dreiecksbereich 41, einen zweiten inneren Dreiecksbereich 13, einen zweiten äußeren Dreiecksbereich 42 und einen Mittelbereich 14 auf, wobei in Bodenlängsrichtung 11 der erste innere Dreiecksbereich 12 zwischen erstem äußeren Dreiecksbereich 41 und Mittelbereich 14 angeordnet ist und der zweite innere Dreiecksbereich 13 zwischen zweitem äußeren Dreiecksbereich 42 und Mittelbereich 14 angeordnet ist. Die Schlauchabschnitte 2 sind derart auf dem Förderband 4 ausgerichtet, dass die Bodenlängsrichtung 11 der Kreuzböden 3 parallel zu der Förderrichtung 5 ist.

Im Bearbeitungsschritt E wird ein Deckblatt 9 mit einer erfindungsgemäßen Vorrichtung 15 gemäß Figur 2 auf die zu Kreuzböden 3 vorgeformten Enden 1 der Schlauchabschnitte 2 aufgelegt und mit diesen verschweißt. Die erfindungsgemäße Vorrichtung 15 ist in Figur 1 aus Übersichtlichkeitsgründen nicht dargestellt. Der durch den Bearbeitungsschritt E fertiggestellte Sack 10 kann nun mit Material gefüllt werden. Bearbeitungsvorrichtungen zum Durchführen der Bearbeitungsschritte A bis D sind hinreichend bekannt und werden deswegen nicht näher ausgeführt.

Es sei noch darauf hingewiesen, dass auch nur an einem Ende 1 der Schlauchabschnitte 2 ein Kreuzboden 3 ausgeformt werden kann, wenn der Sack zum Beispiel als Tüte verwendet werden soll.

Figur 2 zeigt eine Ausführungsform einer erfindungsgemäßen Vorrichtung 15 in einer schematischen Ansicht. Die Vorrichtung 15 umfasst Fördereinrichtungen zum Transport der Schlauchabschnitte 2 und der Deckblätter 9. Die Fördereinrichtung zum Transport der Schlauchabschnitte 2 ist durch das Förderband 4 gebildet, welches die Schlauchabschnitte 2 gemäß Figur 1 an sämtlichen Stationen zur Bearbeitungsschritten A bis E vorbeitransportiert. Die Fördereinrichtung zum Transport der Schlauchabschnitte 2 kann aber auch durch ein eigenständiges Förderband gebildet sein, wobei dabei die Bearbeitungsschritte A bis E an Stationen an zumindest einem separaten Förderband durchgeführt werden.

Die Fördereinrichtung zum Transport der Deckblätter 9 ist durch eine Fördervorrichtung 17 gebildet. Die Fördervorrichtung 17 umfasst einen Schneidzylinder 18, einen Transferzylinder 19, einen Saugzylinder 20 und eine Förderstrecke 21. Die Deckblätter 9 werden mittels auf dem Schneidzylinder 18 und dem Transferzylinder 19 angeordneten Klingen 40 von einem Endlosband 22 abgeschnitten und über den Transferzylinder 19 und die Förderstrecke 21 zum Saugzylinder 20 zugeführt. Der Saugzylinder 20 legt jeweils ein Deckblatt 9 in einem Ablegebereich 23 auf einen Kreuzboden 3 auf, während die Schlauchabschnitte 2 in Förderrichtung 5 gefördert werden und den Ablegebereich 23 passieren. Die Geschwindigkeit der Schlauchabschnitte 2 und der Deckblätter 9 ist beim Auflegen identisch, wobei sowohl die Deckblätter 9 als auch die Schlauchabschnitte 2 beim Auflegen in Förderrichtung 5 transportiert werden. Das Ablegen der Deckblätter 9 auf die Kreuzböden 3 erfolgt am ersten inneren Dreiecksbereich 12 beginnend und setzt sich über den Mittelbereich 14 und den zweiten inneren Dreiecksbereich 13 fort, wobei durch das sukzessive Ablegen im Ablegebereich 23 zwischen Deckblatt 9 und Kreuzböden 3 ein Spalt entsteht.

Die erfindungsgemäße Vorrichtung 15 weist ferner eine Heißgaseinrichtung 24 auf. Die Heißgaseinrichtung 24 ist an eine Gaszufuhr angeschlossen. Die Gaszufuhr ist durch einen Verdichter in Form eines Gebläses 25, einen Druckluftverteiler 28 und einen Injektor 29 gebildet. Das Gebläse 25 schließt über einen Verbindungsschlauch 26 an den Druckluftverteiler 28 an. Der Injektor 29 schließt direkt an den Druckluftverteiler 28 an. Der Druckluftverteiler 28 schließt an die Heißgaseinrichtung 24 an. Der Injektor 29 ist über einen Schlauch 16 an eine externe, nicht näher dargestellte Druckluftversorgung angeschlossen. Das Gebläse 25 umfasst einen Ansaugtrichter 27. Das Gebläse 25 und der Injektor 29 können Teil der Vorrichtung 15 sein, oder können auch extra ausgebildet sein. Weiterhin besteht die Möglichkeit, dass die Gaszufuhr durch einen Verdichter, ein Gebläse und/oder ein Druckluftreservoir gebildet ist.

Die Heißgaseinrichtung 24 weist einen Gaserhitzer 30, ein Heißgasreservoir 31 und eine Düse 32 auf, die in den Ablegebereich 23 für die Deckblätter 9 gerichtet ist. Das Heißgasreservoir 31 schließt direkt an den Gaserhitzer 30 an, und die Düse 32 schließt direkt an das Heißgasreservoir 31 an.

Wird nun ein Gas-Massenstrom durch die Gaszufuhr zur Heißgaseinrichtung 24 zugeführt, so strömt Gas entlang eines Strömungspfads 33 von der Gaszufuhr durch den Gaserhitzer 30, das Heißgasreservoir 31 und die Düse 32 in den Ablegebereich 23.

Das Heißgasreservoir 31 weist ein Innenvolumen 36 auf und ist rohrförmig ausgebildet. Ein Durchmesser des rohrförmigen Innenvolumens 36 ist im Wesentlichen gleich einem Innendurchmesser des Verbindungsschlauchs 26. Das Innenvolumen 36 ist mit einer Isolierschicht 37 ummantelt, um Wärmeverluste so gering wie möglich zu halten.

Die erfindungsgemäße Vorrichtung 15 weist eine Steuerung 34 auf. Die Steuerung 34 ist mit dem Gebläse 25 und dem Injektor 29 zum Kommunizieren verbunden. Mittels der Steuerung 34 ist der Gas-Massenstrom an zur Heißgaseinrichtung 24 zugeführtem Gas regelbar.

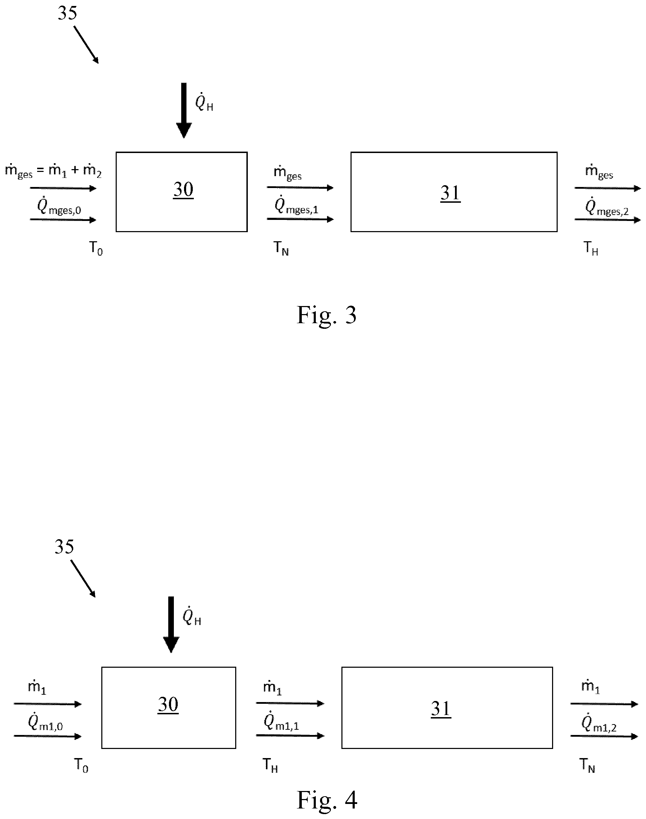

Figuren 3 und 4 zeigen die Heißgaseinrichtung 24 der erfindungsgemäßen Vorrichtung 15 als vereinfachtes System 35.

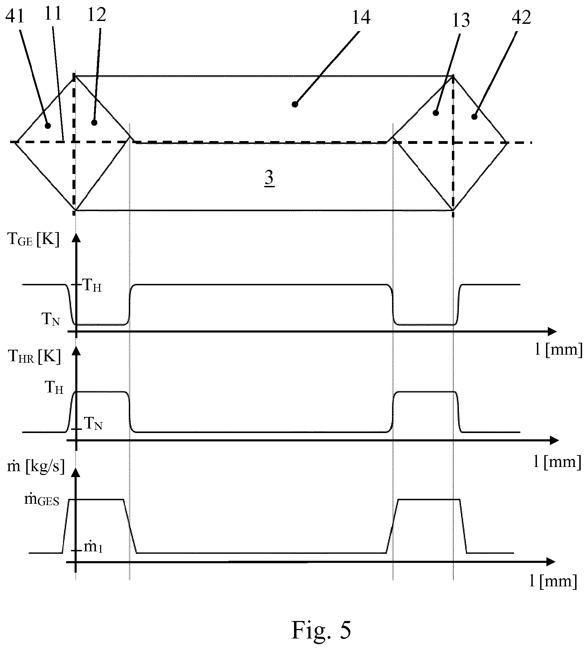

Figur 5 zeigt ein Diagramm der in dem vereinfachten System 35 nach den Figuren 3 und 4 vorherrschenden Temperaturen in Abhängigkeit eines zur Heißgaseinrichtung 24 zugeführten Gas-Massenstroms.

In weiterer Folge wird nun anhand der Figuren 3 bis 5 die Funktion der erfindungsgemäßen Vorrichtung 15 näher erläutert. Dazu wird der Gas-Massenstrom an zur Heißgaseinrichtung zugeführtem Gas näher betrachtet, während ein Kreuzboden 3 den Ablegebereich 23 passiert.

Sobald der erste innere Dreiecksbereich 12 eines Kreuzbodens 3 in den Ablegebereich 23 eintritt trifft der Gas-Massenstrom, der aus der Düse 32 abgegeben wird, auf den ersten inneren Dreiecksbereich 12. Kurz bevor der erste innere Dreiecksbereich 12 den Ablegebereich 23 erreicht, also kurz bevor der Gas-Massenstrom, der aus der Düse 32 abgegeben wird, nicht mehr in dem Abstand 38 auf das Förderband 4 bzw. auf den ersten äußeren Dreiecksbereichs 41 trifft, sondern auf den ersten inneren Dreiecksbereich 12, wird der Gas-Massenstrom, der zur Heißgaseinrichtung 24 zugeführt wird, von einem Grundmassenstrom ṁ₁ auf einen Gesamtmassenstrom ṁ_{ges} erhöht. Siehe Figur 5.

Das Heißgasreservoir 31 ist mit Gas mit einer Temperatur T_{H} - in weiterer Folge als heißes Ladegas bezeichnet - beladen.

Der Gesamtmassenstrom ṁ_{ges} setzt sich aus dem Grundmassenstrom ṁ₁ und einem Impulsmassenstrom ṁ₂ zusammen. Der Grundmassenstrom ṁ₁ wird vom Gebläse 25 erzeugt, und der Impulsmassenstrom ṁ₂ wird über den Injektor 29 erzeugt. Siehe dazu insbesondere auch Figur 3.

Da die Massenbilanz über das gesamte System 35 null betragen muss, ist der Massenstrom durch die Heißgaseinrichtung 24 konstant und entspricht dem Gesamtmassenstrom ṁ_{ges}. Das heißt, dass der Massenstrom des Gases, das an der Düse 32 aus dem Heißgasreservoir 31 austritt, gleich dem Massenstrom des Gases, das zu der Heißgaseinrichtung 24 zugeführt wird, ist.

Über das über den Gesamtmassenstrom ṁ_{ges} zum Gaserhitzer 30 zugeführte Gas wird ein Wärmestrom *Q̇*_{*mges*,0} zum Gaserhitzer zugeführt. Dieser errechnet sich aus dem Grundmassenstrom ṁ₁ und dem Impulsmassenstrom ṁ₂, der spezifischen Wärmekapazität des Gases und der Temperatur T₀ des Grundmassenstroms ṁ₁ und des Impulsmassenstroms m2.

In dem Gaserhitzer 30 wird über ein nicht dargestelltes Heizelement ein Heizwärmestrom *Q̇_{H}* zugeführt. Dadurch wird die Temperatur des Gesamtmassenstrom ṁ_{ges} von T₀ auf T_{N} angehoben und ein Wärmestrom *Q̇*_{*mges*,1} mit dem Gas in das Heißgasreservoir 31 übergeführt. Die Temperatur T_{GE} am Ausgang des Gaserhitzers 30 ist gleich T_{N}. Siehe Figur 5.

Das mit der Temperatur T_{N} in das Heißgasreservoir 31 zugeführte Gas verdrängt das heiße Ladegas aus dem Heißgasreservoir 31 über die Düse 32 und füllt das Heißgasreservoir 31 mit Gas mit der Temperatur T_{N} - in weiterer Folge als kaltes Ladegas bezeichnet. Die Temperatur T_{HR} des an dem Heißgasreservoir 31 bzw. der Düse 32 abgegebenen heißen Ladegases ist gleich T_{H}. Das heiße Ladegas trägt einen Wärmestrom *Q̇*_{*mges*,2} in den Ablegebereich 23 ein. Dieser errechnet sich aus dem Gesamtmassenstrom ṁ_{ges}, der spezifischen Wärmekapazität des Gases und der Temperatur T_{H} des heißen Ladegases.

In dem Moment, in dem der Mittelbereich 14 des Kreuzbodens 3 in den Ablegebereich 23 eintritt, wird der Gas-Massenstrom, der zur Heißgaseinrichtung 24 zugeführt wird, vom Gesamtmassenstrom ṁ_{ges} um den Impulsmassenstrom ṁ₂ auf den Grundmassenstrom ṁ₁ verringert. Dazu wird durch die Steuerung 34 der Injektor 30 ausgeschaltet.

Der Gesamtmassenstrom ṁ_{ges} und das Innenvolumen 36 sind so aufeinander abgestimmt, dass das Heißgasreservoir 31 mit dem kalten Ladegas befüllt wird, aber kein kaltes Ladegas das Heißgasreservoir 31 verlässt, während der Gas-Massenstrom, der zur Heißgaseinrichtung 24 zugeführt wird, dem Gesamtmassenstrom ṁ_{ges} entspricht. Entsprechend ist beim Umschalten von dem Gesamtmassenstrom ṁ_{ges} auf den Grundmassenstrom ṁ₁ das Heißgasreservoir 31 mit kaltem Ladegas befüllt.

Der Massenstrom entspricht aufgrund der Massenbilanz im gesamten System 35 nach dem Umschalten auf den Grundmassenstrom ṁ₁ dem Grundmassenstrom ṁ₁. Über das über den Grundmassenstrom ṁ₁ zum Gaserhitzer 30 zugeführte Gas wird ein Wärmestrom *Q̇*_{*m*1,0} zum Gaserhitzer 30 zugeführt. Dieser errechnet sich aus dem Grundmassenstrom ṁ₁, der spezifischen Wärmekapazität des Gases und der Temperatur T₀ des Grundmassenstroms ṁ₁. Siehe insbesondere Figur 4.

In dem Gaserhitzer 30 wird über das Heizelement der Heizwärmestrom *Q̇_{H}* zugeführt. Der Heizwärmestrom *Q̇_{H}* ist konstant. Dadurch wird die Temperatur des Grundmassenstrom ṁ₁ von T₀ auf T_{H} angehoben und ein Wärmestrom *Q̇*_{*m*1,1} mit dem Gas in das Heißgasreservoir 31 übergeführt. Die Temperatur T_{GE} am Ausgang des Gaserhitzers 30 ist gleich T_{H}, wobei aufgrund des geringeren zugeführten Massenstroms und des konstanten Heizwärmestroms *Q̇_{H}* gilt: T_{H} > T_{N}.

Das mit der Temperatur T_{H} in das Heißgasreservoir 31 zugeführte Gas verdrängt das kalte Ladegas aus dem Heißgasreservoir 31 über die Düse 32 und füllt das Heißgasreservoir 31 mit heißem Ladegas mit der Temperatur T_{H}. Die Temperatur T_{HR} des an dem Heißgasreservoir 31 bzw. der Düse 32 abgegebenen kalten Ladegases ist gleich T_{N}. Das kalte Ladegas trägt einen Wärmestrom *Q̇*_{*m*1,2} in den Ablegebereich 23 ein. Dieser errechnet sich aus dem Grundmassenstrom ṁ₁, der spezifischen Wärmekapazität des Gases und der Temperatur T_{N} des kalten Ladegases.

In dem Moment, in dem der zweite innere Dreiecksbereich 13 des Kreuzbodens 3 in den Ablegebereich 23 eintritt, wird der Gas-Massenstrom, der zur Heißgaseinrichtung 24 zugeführt wird, vom Grundmassenstrom ṁ₁ um den Impulsmassenstrom ṁ₂ auf den Gesamtmassenstrom ṁ_{ges} erhöht. Dazu wird einfach durch die Steuerung 34 der Injektor 30 wieder eingeschaltet. Der Gesamtmassenstrom ṁ_{ges} und das Innenvolumen 36 sind so aufeinander abgestimmt, dass das Heißgasreservoir 31 mit dem heißen Ladegas befüllt wird, aber kein heißes Ladegas das Heißgasreservoir 31 verlässt, während der Gas-Massenstrom, der zur Heißgaseinrichtung 24 zugeführt wird, dem Grundmassenstrom ṁ₁ entspricht. Entsprechend ist beim Umschalten von dem Grundmassenstrom ṁ₁ auf den Gesamtmassenstrom ṁ_{ges} das Heißgasreservoir 31 mit heißem Ladegas befüllt. Nun wiederholt sich der Prozess exakt gleich wie beim ersten inneren Dreiecksbereich 12. Es wird Gas mit der Temperatur T_{H} aus der Düse 32 bzw. dem Heißgasreservoir 31 abgegeben und das Heißgasreservoir 31 mit kaltem Ladegas befüllt.

Wenn der zweite innere Dreiecksbereich 13 den Ablegebereich 23 verlässt, wird der zum Gaserhitzer 30 zugeführte Gas-Massenstrom wieder vom Gesamtmassenstrom ṁ_{ges} auf den Grundmassenstrom ṁ₁ verringert und das Heißgasreservoir 31 mit heißem Ladegas geladen und Gas mit der Temperatur T_{N} aus dem Heißgasreservoir 31 verdrängt. Entsprechend verlässt Gas mit der niedrigen Temperatur T_{N} und dem Grundmassenstrom ṁ₁ die Düse 32 in den Ablegebereich 23, wenn sich die äußeren Dreiecksbereiche 41 und 42 in dem Ablegebereich 23 befinden und wenn das Gas im Abstand 38 auf das Förderband 4 trifft bzw. sobald der zweite innere Dreiecksbereich 13 den Ablegebereich 23 passiert hat.

Vorteilhaft wird das Gas mit der niedrigen Temperatur T_{N} und dem Grundmassenstrom ṁ₁, wenn sich die äußeren Dreiecksbereiche 41 und 42 in dem Ablegebereich 23 befinden und wenn das Gas im Abstand 38 auf das Förderband 4 treffen würde, durch ein nicht dargestelltes Ablenkmittel, beispielsweise einem Drehschieber oder einem Umlenkblech, vom Ablegebereich 23 weg in eine Umgebung abgeleitet. Hierdurch wird vermieden, dass es zu einem Wärmeintrag in die äußeren Dreiecksbereiche 41 und 42 kommt, was zur Schädigung des Gewebes führen könnte.

Erreicht ein weiterer innerer erster Dreiecksbereich 12 eines nachfolgenden Kreuzbodens 3 den Ablegebereich 23, startet der oben beschriebene Prozess wieder von vorne.

Da der Mittelbereich 14 gegenüber den inneren Dreiecksbereichen 12 und 13 erhaben ist, ist der Mittelbereich 14 näher an der Düse 32 angeordnet als die inneren Dreiecksbereiche 12 und 13. Durch die erhöhte Temperatur T_{H} und den erhöhten Massenstrom ṁ_{ges}, mit dem das Gas in die inneren Dreiecksbereiche 12 und 13 aus der Düse 32 ausgegeben wird, wird in den inneren Dreiecksbereichen 12 und 13 die gleiche Wärmemenge eingebracht wie im Mittelbereich 14, wodurch eine Oberfläche des Kreuzbodens 3 gleichmäßig erwärmt und aufgeschmolzen wird.

Während ein Deckblatt 9 auf einen Kreuzboden 3 aufgelegt und Wärme über den Gas-Massenstrom in den Ablegebereich 23 eingebracht wird, wird mittels eines Presszylinders 39 das Deckblatt 9 auf den Kreuzboden 3 gepresst, wodurch der Kreuzboden 3 mit dem Deckblatt 9 verschweißt wird.

Durch die gleichmäßige Erwärmung der Oberfläche des Kreuzbodens 3 kann eine gleichmäßige Haftung der Deckblätter 9 auf den Kreuzböden 3 erzielt werden. Durch das Heißgasreservoir 31 und die erfindungsgemäße geregelte Zufuhr von Gas zur Heißgaseinrichtung 24 kann der Heizwärmestrom *Q̇_{H}* konstant gehalten werden und es wird vermieden, dass heißes Gas ungenützt an die Umgebung abgegeben werden muss, um die Oberfläche des Kreuzbodens 3 gleichmäßig zu erwärmen.

## Patentansprüche

1. Vorrichtung (15) zum Aufbringen von Deckblättern (9) auf zu Kreuzböden (3) vorgeformten Enden (1) von Schlauchabschnitten (2) aus Kunststoffmaterial, umfassend:
Fördereinrichtungen (4, 20) zum Transport der Schlauchabschnitte (2) und zum Transport und zum Ablegen der Deckblätter (9) auf die Kreuzböden (3) der Schlauchabschnitte (2) in einem Ablegebereich (23) während der Förderung der Schlauchabschnitte (2), und
eine Heißgaseinrichtung (24) mit einem Gaserhitzer (30) zum Erhitzen von Gas und einer an den Gaserhitzer (30) angeschlossenen, zu dem Ablegebereich (23) für die Deckblätter (9) gerichteten Düse (32), wobei der Gaserhitzer (30) an eine Gaszufuhr anschließbar ist und wobei bei Zufuhr von Gas zum Gaserhitzer (30) das Gas entlang eines Strömungspfads (33) von der Gaszufuhr durch den Gaserhitzer (30) und die Düse (32) in den Ablegebereich (23) strömt,
wobei die Heißgaseinrichtung (24) ein Heißgasreservoir (31) mit einem Innenvolumen (36) zum temporären Speichern von Heißgas aufweist, welches in den Gaserhitzer (30) integriert oder zwischen dem Gaserhitzer (30) und der Düse (32) angeordnet ist, wobei der Strömungspfad (33) durch das Heißgasreservoir (31) verläuft, und
wobei ein Gas-Massenstrom (ṁ₁, ṁ₂, ṁ_{ges}) an zum Gaserhitzer (30) zugeführten Gas mittels einer Steuerung (34) regelbar ist,
**dadurch gekennzeichnet,**
**dass** die Steuerung (34) ausgebildet ist den Gas-Massenstrom (ṁ₁, ṁ₂, ṁ_{ges}) an zum Gaserhitzer (30) zugeführtem Gas von einem Grundmassenstrom (ṁ₁) temporär um einen Pulsmassenstrom (ṁ₂) auf einen Gesamtmassenstrom (ṁ_{ges}) zu erhöhen.

2. Vorrichtung (15) nach Anspruch 1, **dadurch gekennzeichnet, dass** das Heißgasreservoir (31) rohrförmig ausgebildet ist.

3. Vorrichtung (15) nach Anspruch 1 oder 2, **dadurch gekennzeichnet, dass** die Gaszufuhr eine Komponente der Vorrichtung (15) zum Aufbringen von Deckblättern (9) auf zu Kreuzböden (3) vorgeformten Enden (1) von Schlauchabschnitten (2) aus Kunststoffmaterial bildet und zumindest einen Verdichter (25) und/oder zumindest ein Druckluftreservoir aufweist.

4. Vorrichtung (15) nach einem der Ansprüche 1 bis 3, **dadurch gekennzeichnet, dass** ein Volumen des Pulsmassenstroms (ṁ₂) ein Fünftel bis ein Zwanzigstel des Innenvolumens (36) des Heißgasreservoirs (31) beträgt.

5. Vorrichtung (15) nach Anspruch 4, **dadurch gekennzeichnet, dass** die Gaszufuhr zumindest einen Verdichter (25) und/oder zumindest ein Druckluftreservoir und einen Injektor (29) aufweist, wobei zumindest ein konstant laufender Verdichter (25) den Grundmassenstrom (ṁ₁) an zum Gaserhitzer (30) zugeführtem Gas erzeugt und der Injektor (29) mittels zumindest eines zweiten Verdichters und/oder zumindest eines Druckluftreservoirs den Pulsmassenstrom (ṁ₂) erzeugt, zum Grundmassenstrom (mi) zuführt und dadurch den Gesamtmassenstrom (ṁ_{ges}) erzeugt.

6. Vorrichtung (15) nach einem der vorherigen Ansprüche, **dadurch gekennzeichnet, dass** die Fördereinrichtung zum Fördern der Schlauchabschnitte (2) als Gurtförderer oder als Bandförderer (4) ausgebildet ist und dass die Fördereinrichtung zum Fördern der Deckblätter (9) als Saugzylinder (20) ausgebildet ist.

7. Vorrichtung (15) nach einem der vorherigen Ansprüche, **dadurch gekennzeichnet, dass** das Innenvolumen (36) des Heißgasreservoirs (31) veränderbar ist.

8. Verfahren zum Aufbringen von Deckblättern (9) auf zu Kreuzböden (3) vorgeformten Enden (1) von Schlauchabschnitten (2) aus Kunststoffmaterial, wobei die zu Kreuzböden (3) vorgeformten Enden (1) jeweils einen ersten äußeren Dreiecksbereich (41), einen ersten inneren Dreiecksbereich (12), einen zweiten äußeren Dreiecksbereich (42), einen zweiten inneren Dreiecksbereich (13) und einen Mittelbereich (14) aufweisen, wobei in Bodenlängsrichtung (11) der erste innere Dreiecksbereich (12) zwischen erstem äußeren Dreiecksbereich (41) und Mittelbereich (14) angeordnet ist und der zweite innere Dreiecksbereich (13) zwischen zweitem äußeren Dreiecksbereich (42) und Mittelbereich (14) angeordnet ist, folgende Schritte umfassend:
a) Transportieren der Schlauchabschnitte (2) in einer Förderrichtung (5), wobei die Bodenlängsrichtung (11) der Kreuzböden (3) parallel zur Förderrichtung (5) liegt;
b) Transportieren der Deckblätter (9) in Förderrichtung (5);
c) während der Förderung der Schlauchabschnitte (2) Auflegen jeweils eines Deckblatts (9) auf einen Kreuzboden (3) in einem Ablegebereich (23) wenn einer der Kreuzböden (3) den Ablegebereich (23) passiert,
wobei das Verfahren ferner den Schritt des Zuführens eines Gases mit einem Massenstrom (ṁ_{ges}) zu einer Heißgaseinrichtung (24) während des Auflegens des Deckblatts (9) umfasst, wobei die Heißgaseinrichtung (24) einen Gaserhitzer (30), ein Heißgasreservoir (31) und eine Düse (32) aufweist, die erhitztes Gas in den Ablegebereich (23) leitet,
**dadurch gekennzeichnet, dass**
- das Gas mit einem erhöhten Massenstrom (ṁ_{ges}) zur Heißgaseinrichtung (24) zugeführt wird, während der erste innere Dreiecksbereich (12) eines Kreuzbodens (3) den Ablegebereich (23) passiert,
- das Gas mit einem verringerten Massenstrom (ṁ₁) zur Heißgaseinrichtung (24) zugeführt wird, während der Mittelbereich (14) eines Kreuzbodens (3) den Ablegebereich (23) passiert, und
- das Gas mit einem erhöhten Massenstrom (ṁ_{ges}) zur Heißgaseinrichtung (24) zugeführt wird, während der zweite innere Dreiecksbereich (13) eines Kreuzbodens (3) den Ablegebereich (23) passiert.

9. Verfahren nach Anspruch 8, **dadurch gekennzeichnet, dass** der Massenstrom (ṁ₁, ṁ₂, ṁ_{ges}) an zur Heißgaseinrichtung (24) zugeführtem Gas erhöht wird, kurz bevor der erste innere Dreiecksbereich (12) eines Kreuzbodens (3) den Ablegebereich (23) erreicht.

10. Verfahren nach Anspruch 8 oder 9, **dadurch gekennzeichnet, dass** der Massenstrom (ṁ₁, ṁ₂, ṁ_{ges}) an zur Heißgaseinrichtung (24) zugeführtem Gas verringert wird, sobald der Mittelbereich (14) in den Ablegebereich (23) eintritt.

11. Verfahren nach einem der Ansprüche 8 bis 10, **dadurch gekennzeichnet, dass** der Massenstrom (ṁ₁, ṁ₂, ṁ_{ges}) an zur Heißgaseinrichtung (24) zugeführtem Gas erhöht wird, sobald der zweite innere Dreiecksbereich (13) in den Ablegebereich (23) eintritt.

12. Verfahren nach einem der Ansprüche 8 bis 11, **dadurch gekennzeichnet, dass** die Schlauchabschnitte (2) - in Förderrichtung (5) gesehen - voneinander beabstandet transportiert werden, wobei der Massenstrom (ṁ₁, ṁ₂, ṁ_{ges}) an zur Heißgaseinrichtung (24) zugeführtem Gas verringert wird, während sich kein erster innerer Dreiecksbereich (12), zweiter innerer Dreiecksbereich (13) oder Mittelbereich (14) eines Kreuzbodens (3) im Ablegebereich (23) befindet.

13. Verfahren nach Anspruch 12, **dadurch gekennzeichnet, dass** der Massenstrom (ṁ₁, ṁ₂, ṁ_{ges}) an zur Heißgaseinrichtung (24) zugeführtem Gas verringert wird, sobald der zweite innere Dreiecksbereich (13) eines Kreuzbodens (3) den Ablegebereich (23) passiert hat.

## Claims

1. A device (15) for applying cover sheets (9) to ends (1) of tubular sections (2) made of a synthetic material, the ends having been preformed into cross-bottoms (3), comprising:
conveying means (4, 20) for transporting the tubular sections (2) and for transporting and depositing the cover sheets (9) on the cross-bottoms (3) of the tubular sections (2) in a deposit area (23), while the tubular sections (2) are being conveyed, and
a hot gas means (24) comprising a gas heater (30) for heating gas and a nozzle (32) connected to the gas heater (30) and directed towards the deposit area (23) for the cover sheets (9), with the gas heater (30) being connectable to a gas supply and the gas flowing along a flow path (33) from the gas supply through the gas heater (30) and the nozzle (32) into the deposit area (23), when gas is supplied to the gas heater (30),
wherein the hot gas means (24) comprises a hot gas reservoir (31) having an internal volume (36) for the temporary storage of hot gas, which is integrated into the gas heater (30) or is arranged between the gas heater (30) and the nozzle (32), with the flow path (33) running through the hot gas reservoir (31), and
wherein a gas mass flow (ṁ₁, ṁ₂, ṁ_{ges}) of gas supplied to the gas heater (30) is adjustable by means of a control (34),
**characterized in that** the control (34) is designed for raising the gas mass flow (ṁ₁, ṁ₂, ṁ_{ges}) of gas supplied to the gas heater (30) from a basic mass flow (ṁ₁) temporarily by one pulse mass flow (ṁ₂) to a total mass flow (ṁ_{ges}).

2. A device (15) according to claim 1, **characterized in that** the hot gas reservoir (31) has a tube-shaped design.

3. A device (15) according to claim 1 or 2, **characterized in that** the gas supply constitutes a component of the device (15) for applying cover sheets (9) to ends (1) of tubular sections (2) made of a synthetic material, the ends having been preformed into cross-bottoms (3), and comprises at least one compressor (25) and/or at least one compressed air reservoir.

4. A device (15) according to any of claims 1 to 3, **characterized in that** a volume of the pulse mass flow (ṁ₂) is one fifth to one twentieth of the internal volume (36) of the hot gas reservoir (31).

5. A device (15) according to claim 4, **characterized in that** the gas supply comprises at least one compressor (25) and/or at least one compressed air reservoir and an injector (29), wherein at least one constantly operating compressor (25) generates the basic mass flow (mi) of gas supplied to the gas heater (30) and the injector (29) generates the pulse mass flow (ṁ₂) by means of at least one second compressor and/or at least one compressed air reservoir, supplies it to the basic mass flow (ṁ₁) and thereby generates the total mass flow (ṁ_{ges}).

6. A device (15) according to any of the preceding claims, **characterized in that** the conveying means for conveying the tubular sections (2) is designed as a belt conveyor or as a band conveyor (4) and that the conveying means for conveying the cover sheets (9) is designed as a suction cylinder (20).

7. A device (15) according to any of the preceding claims, **characterized in that** the internal volume (36) of the hot gas reservoir (31) is variable.

8. A method of applying cover sheets (9) to ends (1) of tubular sections (2) made of a synthetic material, the ends having been preformed into cross-bottoms (3), wherein the ends (1) preformed into cross-bottoms (3) each have a first outer triangular area (41), a first inner triangular area (12), a second outer triangular area (42), a second inner triangular area (13) and a central area (14), with the first inner triangular area (12) being arranged in the bottom longitudinal direction (11) between the first outer triangular area (41) and the central area (14) and the second inner triangular area (13) being arranged between the second outer triangular area (42) and the central area (14), comprising the following steps:
a) transporting the tubular sections (2) in a conveying direction (5), with the bottom longitudinal direction (11) of the cross-bottoms (3) being parallel to the conveying direction (5);
b) transporting the cover sheets (9) in the conveying direction (5);
c) while the tubular sections (2) are being conveyed, applying in each case one cover sheet (9) onto a cross-bottom (3) in a deposit area (23), when one of the cross-bottoms (3) passes the deposit area (23),
wherein the method furthermore comprises the step of supplying a gas with a mass flow (ṁ_{ges}) to a hot gas means (24), while the cover sheet (9) is being applied, with the hot gas means (24) comprising a gas heater (30), a hot gas reservoir (31) and a nozzle (32) guiding heated gas into the deposit area (23),
**characterized in that**
- the gas is supplied with an increased mass flow (ṁ_{ges}) to the hot gas means (24), while the first inner triangular area (12) of a cross-bottom (3) passes the deposit area (23),
- the gas is supplied with a reduced mass flow (mi) to the hot gas means (24), while the central area (14) of a cross-bottom (3) passes the deposit area (23), and
- the gas is supplied with an increased mass flow (ṁ_{ges}) to the hot gas means (24), while the second inner triangular area (13) of a cross-bottom (3) passes the deposit area (23).

9. A method according to claim 8, **characterized in that** the mass flow (ṁ₁, ṁ₂, ṁ_{ges}) of gas supplied to the hot gas means (24) is increased shortly before the first inner triangular area (12) of a cross-bottom (3) reaches the deposit area (23).

10. A method according to claim 8 or 9, **characterized in that** the mass flow (mi, ṁ₂, ṁ_{ges}) of gas supplied to the hot gas means (24) is reduced as soon as the central area (14) enters into the deposit area (23).

11. A method according to any of claims 8 to 10, **characterized in that** the mass flow (ṁ₁, ṁ₂, ṁ_{ges}) of gas supplied to the hot gas means (24) is increased as soon as the second inner triangular area (13) enters into the deposit area (23).

12. A method according to any of claims 8 to 11, **characterized in that** the tubular sections (2) - viewed in the conveying direction (5) - are transported at a distance from each other, wherein the mass flow (ṁ₁, ṁ₂, ṁ_{ges}) of gas supplied to the hot gas means (24) is reduced, while no first inner triangular area (12), second inner triangular area (13) or central area (14) of a cross-bottom (3) is located in the deposit area (23).

13. A method according to claim 12, **characterized in that** the mass flow (ṁ₁, ṁ₂, ṁ_{ges}) of gas supplied to the hot gas means (24) is reduced as soon as the second inner triangular area (13) of a cross-bottom (3) has passed the deposit area (23).

## Revendications

1. Dispositif (15) d'application de feuilles de couverture (9) sur des extrémités préformées (1) à fonds croisés (3) de tronçons de tube (2) en matière plastique, comprenant :
des systèmes de transport (4, 20) qui permettent de transporter les tronçons de tube (2) et qui permettent de transporter et de déposer les feuilles de couverture (9) sur les fonds croisés (3) des tronçons de tube (2) à l'intérieur d'une zone de dépôt (23) pendant le transport des tronçons de tube (2), et
un système de gaz chaud (24) pourvu d'un réchauffeur de gaz (30) qui permet de réchauffer le gaz et d'une buse (32) raccordée au réchauffeur de gaz (30), orientée en direction de la zone de dépôt (23) pour les feuilles de couverture (9), le réchauffeur de gaz (30) pouvant être raccordé à une conduite de gaz et le gaz s'écoulant le long d'une voie d'écoulement (33) de la conduite de gaz à travers le réchauffeur de gaz (30) et la buse (32) à l'intérieur de la zone de dépôt (23) lorsque le gaz est amené au réchauffeur de gaz (30),
le système de gaz chaud (24) comprenant un réservoir de gaz chaud (31) présentant un volume intérieur (36) qui permet de stocker le gaz chaud de manière temporaire,
ledit réservoir de gaz chaud étant intégré à l'intérieur du réchauffeur de gaz (30) ou
étant disposé entre le réchauffeur de gaz (30) et la buse (32), la voie d'écoulement (33) s'étendant à travers le réservoir de gaz chaud (31), et
un flux massique de gaz (ṁ₁, ṁ₂, ṁ_{ges}) pour le gaz amené au réchauffeur de gaz (30) pouvant être régulé à l'aide d'une commande (34),
**caractérisé en ce que** la commande (34) est conçue de manière à augmenter le flux massique de gaz (ṁ₁, ṁ₂, ṁ_{ges}) pour le gaz amené au réchauffeur de gaz (30) d'un flux massique de base (ṁ₁) situé temporairement autour d'un flux massique pulsé (ṁ₂) à un flux massique total (ṁ_{ges}).

2. Dispositif (15) selon la revendication 1, **caractérisé en ce que** le réservoir de gaz chaud (31) est de forme tubulaire.

3. Dispositif (15) selon la revendication 1 ou 2, **caractérisé en ce que** la conduite de gaz est un composant du dispositif (15) d'application de feuilles de couverture (9) sur des extrémités préformées (1) à fonds croisés (3) de tronçons de tube (2) en matière plastique et présente au moins un compresseur (25) et/ou au moins un réservoir d'air comprimé.

4. Dispositif (15) selon l'une quelconque des revendications 1 à 3, **caractérisé en ce qu'**un volume de flux massique pulsé (ṁ₂) est compris entre un cinquième et un vingtième du volume intérieur (36) du réservoir de gaz chaud (31).

5. Dispositif (15) selon la revendication 4, **caractérisé en ce que** la conduite de gaz présente au moins un compresseur (25) et/ou au moins un réservoir d'air comprimé et un injecteur (29), dans lequel ledit au moins un compresseur (25) à fonctionnement constant génère le flux massique de base (mi) pour le gaz amené au réchauffeur de gaz (30) et l'injecteur (29) génère le flux massique pulsé (ṁ₂) à l'aide d'au moins un second compresseur et/ou d'au moins un réservoir d'air comprimé, amenant le flux massique pulsé (ṁ₂) au flux massique de base (ṁ₁) et générant de ce fait le flux massique total (ṁ_{ges}).

6. Dispositif (15) selon l'une quelconque des revendications précédentes, **caractérisé en ce que** le système de transport qui permet de transporter les tronçons de tube (2) se présente sous la forme d'un convoyeur à courroie ou d'un convoyeur à bande (4), et **en ce que** le système de transport qui permet de transporter les feuilles de couverture (9) se présente sous la forme d'un cylindre d'aspiration (20).

7. Dispositif (15) selon l'une quelconque des revendications précédentes, **caractérisé en ce que** le volume intérieur (36) du réservoir de gaz chaud (31) peut être modifié.

8. Procédé d'application de feuilles de couverture (9) sur des extrémités préformées (1) à fonds croisés (3) de tronçons de tube (2) en matière plastique, les extrémités préformées (1) à fonds croisés (3) présentant respectivement une première zone triangulaire extérieure (41), une première zone triangulaire intérieure (12), une seconde zone triangulaire extérieure (42), une seconde zone triangulaire intérieure (13) et une zone centrale (14), la première zone triangulaire intérieure (12) étant disposée dans la direction longitudinale du fond (11) entre la première zone triangulaire extérieure (41) et la zone centrale (14), et la seconde zone triangulaire intérieure (13) étant disposée entre la seconde zone triangulaire extérieure (42) et la zone centrale (14), le procédé comprenant les étapes suivantes :
a) transporter les tronçons de tube (2) dans une direction de transport (5), la direction longitudinale du fond (11) des fonds croisés (3) étant parallèle à la direction de transport (5) ;
b) transporter les feuilles de couverture (9) dans la direction de transport (5) ; et
c) appliquer, pendant le transport des tronçons de tube (2), respectivement une feuille de couverture (9) sur un fond croisé (3) à l'intérieur d'une zone de dépôt (23) lorsque l'un des fonds croisés (3) franchit la zone de dépôt (23),
le procédé comprenant en outre l'étape consistant à amener un gaz présentant un flux massique (ṁ_{ges}) à un système de gaz chaud (24) pendant l'application de la feuille de couverture (9), le système de gaz chaud (24) comprenant un réchauffeur de gaz (30), un réservoir de gaz chaud (31) et une buse (32) qui conduit le gaz réchauffé à l'intérieur de la zone de dépôt (23),
**caractérisé en ce que** :
- le gaz présentant un flux massique (ṁ_{ges}) augmenté est amené au système de gaz chaud (24) pendant que la première zone triangulaire intérieure (12) d'un fond croisé (3) franchit la zone de dépôt (23),
- le gaz présentant un flux massique (ṁ₁) réduit est amené au système de gaz chaud (24) pendant que la zone centrale (14) d'un fond croisé (3) franchit la zone de dépôt (23), et
- le gaz présentant un flux massique (ṁ_{ges}) augmenté est amené au système de gaz chaud (24) pendant que la seconde zone triangulaire intérieure (13) d'un fond croisé (3) franchit la zone de dépôt (23).

9. Procédé selon la revendication 8, **caractérisé en ce que** le flux massique (ṁ₁, ṁ₂, ṁ_{ges}) de gaz amené au système de gaz chaud (24) est augmenté, juste avant que la première zone triangulaire intérieure (12) d'un fond croisé (3) n'atteigne la zone de dépôt (23).

10. Procédé selon la revendication 8 ou 9, **caractérisé en ce que** le flux massique (ṁ₁, ṁ₂, ṁ_{ges}) de gaz amené au système de gaz chaud (24) est réduit aussitôt que la zone centrale (14) pénètre à l'intérieur de la zone de dépôt (23).

11. Procédé selon l'une quelconque des revendications 8 à 10, **caractérisé en ce que** le flux massique (ṁ₁, ṁ₂, ṁ_{ges}) de gaz amené au système de gaz chaud (24) est augmenté aussitôt que la seconde zone triangulaire intérieure (13) pénètre à l'intérieur de la zone de dépôt (23).

12. Procédé selon l'une quelconque des revendications 8 à 11, **caractérisé en ce que** les tronçons de tube (2) - vus dans la direction de transport (5) - sont transportés à distance l'un de l'autre, le flux massique (ṁ₁, ṁ₂, ṁ_{ges}) de gaz amené au système de gaz chaud (24) étant réduit pendant qu'aucune première zone triangulaire intérieure (12), aucune seconde zone triangulaire intérieure (13) ou aucune zone centrale (14) d'un fond croisé (3) ne se trouve à l'intérieur de la zone de dépôt (23).

13. Procédé selon la revendication 12, **caractérisé en ce que** le flux massique (ṁ₁, ṁ₂, ṁ_{ges}) de gaz amené au système de gaz chaud (24) est réduit aussitôt que la seconde zone triangulaire intérieure (13) d'un fond croisé (3) a franchi la zone de dépôt (23).
